# EUROPEAN PATENT APPLICATION

(11) **EP 3 124 700 A1**
(43) Date of publication of application: **01.02.2017**
(21) Application number: 15382397.6
(22) Date of filing: 29.07.2015
(51) Int. Cl.: E01F 7/04, F16F 7/12

(54) **ENERGY DISSIPATION DEVICE FOR PROTECTION SYSTEMS**

(71) Applicant: 3S Geotecnia y Tecnologia S.L., 20115 Astigarraga (ES)
(72) Inventor: TORRES VILA, Juan Antonio, 20115 ASTIGARRAGA (ES); TORRES VILA, Carlos Manuel, 39012 MONTE (ES); HERNANDEZ SANZ, Alberto, 39011 PEÑACASTILLO (ES)
(74) Representative: Igartua, Ismael

(57) **Abstract**

Energy dissipation device for protection systems, comprising two attachment points (101, 102) separated by a load distance (A) which increases as the load on said device (100) increases, and at least one load transmission element (103) fixed to each of the attachment points (101, 102). The device (100) further comprises a hollow structural body (1), and a longitudinal metal strip (2) with a length greater than the structural body (1), which passes through said structural body (1) and is longitudinally movable in response to a load, an attachment point (101) being arranged in the structural body (1) and the other attachment point (102) being arranged in the metal strip (2). The device (100) comprises deformation means (3) fixed to the inside of the structural body (1) which are suitable for generating deformation in the metal strip (2).

## Description

### TECHNICAL FIELD

The present invention relates to devices for energy dissipation against slides, particularly devices for dynamic passive protection systems for protection against a rockslide or dynamic protective screens using devices for absorbing kinetic energy by plastic deformation.

### PRIOR ART

The purpose of dynamic passive protection systems for protection against a rockslide, also known as dynamic screens, is to stop and contain stone blocks or other elements sliding off slopes or rocky hillsides.

In order to be able to stop a given mass, the protection system must be capable of absorbing the kinetic energy that the mass acquired during its trajectory until reaching the containment system. The process of stopping the block is achieved by means of transforming its kinetic energy into deformation work through stretching and movement of the assembly of elements forming the dynamic passive protection system.

Upon the impact of a block, the protection system undergoes a movement, causing a reduction in the acting reaction forces proportional to the magnitude of the movement produced. For this reason, the kinetic energy absorption capacity of the protection system is limited by the movement restriction imposed by its components, as well as the resistance thereof.

Dynamic passive protection systems are generally made up of a capturing surface secured to a support element or structure which is in turn fixed to the ground through different type of anchorings. The capturing surface can be of a flexible type, formed by means of wire meshes, interconnected wire ring networks or cable networks, or of a rigid type, formed by electrowelded steel bar meshes, the former being those most commonly used due to their deformation capacity and flexibility characteristics. The support structure is usually made up of a system comprising metal posts anchored or embedded in the ground, an assembly of steel cables and possibly steel cable ties fixed to the ground by means of flexible cable anchorings acting as reaction elements of the system.

The functional behavior of the dynamic passive protection systems throughout their service life depends on the behavior shown by their components at the time of receiving an impact, dynamic passive protection systems being separated into systems having an elastic behavior and systems having an elastoplastic behavior.

In dynamic passive protection systems having an elastic behavior, the kinetic energy transmitted by the block in the moment of impact is dissipated by means of elastic deformation of the components, mainly the capturing surface and the steel support cables of the system. Once the block is stopped, the energy accumulated in the dynamic passive protection system is invested in the direction of the reaction force, returning the impacted block towards the side of the mountain, allowing the assembly of the protection system to recover the geometric and mechanical conditions prior to the impact.

Dynamic passive protection systems having an elastic behavior are considered multi-impact, provided that the level of energy associated with the working capacity in elastic state of the assembly is not exceeded in any impacts, and they have limitations with respect to the maximum level of energy that they are capable of absorbing through the deformation of their elements, offering a reduced range of use associated with low energy impacts.

As regards dynamic passive protection systems having an elastoplastic behavior, they have a dual behavior considering the amount of kinetic energy which is transmitted in the moment of impact. For impacts in which the transmitted energy is less than the elastic capacity of the system, the latter responds elastically showing a behavior identical to dynamic passive protection systems having an elastic behavior. In the moment in which it is necessary to damp impact energies greater than the working capacity in elastic state, plastic energy dissipation devices come into operation. The increase in energy necessary to enable absorbing the impact is obtained as a result of non-recoverable plastic deformations introduced by the plastic dissipation device in the system. These non-recoverable plastic deformations introduced in the dynamic passive protection system result in a loss of its protective height, as well as a reduction in its absorption capacity equal to the energy dissipated by plastic deformation of the plastic dissipation device during the impact. The maximum level of energy that a dynamic passive protection system having an elastoplastic behavior is capable of damping corresponds to the sum of the level of energy associated with the elastic working capacity plus the level of energy dissipated by the assembly of dissipators installed.

Prior art documents relating to longitudinal energy dissipating devices dissipating energy based on the plastic deformation of one of their components are known. The operation of such devices is based on the formation of steel cable wire loops, which are introduced inside a metal tube formed in a helix shape such as in the solution disclosed in EP0494046A1, or in a "u" shape such as in the solution disclosed in EP1811087A2. The two ends of the tube overlap one another and are attached through a pressure element or ring, generally made up of an aluminum sleeve, forming a frictional attachment, which in response to a possible cable overload causes reduction in the diameter of the helix and deformation of the tube with subsequent energy dissipation by plastic deformation and by friction. The main drawback of these systems is that once worn out, they must be replaced with a new device, since they cannot be reused once subjected to the load process, which involves an increase in the maintenance costs of the dynamic protection system throughout its service life. In addition, the load damping curve or energy dissipation curve of such devices increases in a rather linear and progressive manner, the operation thereof being activated for low load levels even when the impacts received by the assembly of the system are less than the energy absorption capacity of the device.

EP2607746A1 shows a type of friction dissipator made up of a metal element with two parallel lines of perforations through which two braking elements made up of a zig-zag-shaped steel cable are inserted. One of the ends of the assembly is connected to a reaction element whereas the steel braking cables are jointly connected to a support element transmitting the load. The device is installed such that, in response to a tensile load request, the braking cables run a given distance through the perforations of the metal element dissipating a certain amount of energy by friction proportional to the distance run, causing an increase in the total length of the system. The braking cables are connected to the device such that the sliding thereof is performed in a sequential manner until the free end of each cable, provided with a mechanical stop, runs a given distance. This type of energy dissipation or braking device used in dynamic slide containment systems has a limited energy absorption capacity and can damage the braking cable along its travel due to the direct contact of the cable with the edges of the perforations.

WO2014075817A1 discloses a braking and energy absorption device for use in landslide capturing systems, comprising a discoidal metal element with two side perforations separated a certain distance, in which two aligned load transmission elements are fixed, i.e., a pull element and a reaction element, such that the device is arranged between both. The discoidal metal element has an assembly of perforations in a double spiral shape weakening the section which, in response to a known linear tensile load request, cause the discoidal metal element to break into two helices extending in opposite directions from the fixing points, which become separated by a distance greater than the initial distance. The dissipation energy of such devices is derived, on one hand, from the work generated by the forces when the discoidal metal element breaks, and on the other hand, due to the extension generated in the pull elements (difference between the two distances), which results in a damping effect.

### DISCLOSURE OF THE INVENTION

The object of the invention is to provide a longitudinal energy absorption device for protection systems, as defined in the claims.

The energy absorption device of the invention is suitable for use within a dynamic passive protection system for protection against slides, a protection system for protection against debris flow or a protection system for protection against snow avalanches, for example.

The device comprises a first attachment point and a second attachment point separated by a load distance which increases as the load on said device increases, and at least a respective load transmission element fixed to each of the attachment points.

The device further comprises a hollow structural body and a longitudinal metal strip comprising a length greater than the structural body, which longitudinally passes through said structural body and is longitudinally movable in response to a load. The first attachment point of the device is arranged in the structural body and the second attachment point of said device is arranged in the metal strip. Therefore, in response to the presence of a load due to a slide, for example, the metal strip moves and the attachment points are separated as a response to this movement. This movement allows suitably and simply supporting a load, without the device being negatively affected.

The device further comprises deformation means which are fixed inside the structural body and are suitable for generating and/or maintaining a deformation in the metal strip, said deformation corresponding with a plastic deformation of the metal strip. The deformation moves along the metal strip as the strip moves, such that the capacity of the device comprising this metal strip for absorbing energy by plastic deformation is increased in a simple and easy manner.

These and other advantages and features of the invention will become evident in view of the drawings and the detailed description of the invention.

### DESCRIPTION OF THE DRAWINGS

Figure 1 shows one embodiment of a device of the invention.
Figure 2a shows the device of Figure 1, assembled in a protection system.
Figure 2b shows a front view of a protection system with a plurality of devices such as the one of Figure 1.
Figure 2c shows a capturing surface of a protection system, attached to a support element and associated with a device such as the one of Figure 1.
Figure 3a shows the structural body of the device of Figure 1.
Figure 3b is a cutaway view of the structural body of Figure 3a.
Figure 4 shows the metal strip of the device of Figure 1.
Figure 5 shows an example of the damping force developed in the device of Figure 1.
Figure 6 shows the deformation of the metal strip between the pins forming the deformation means, with the structural body cutaway.
Figure 7 shows the metal strip of the device of Figure 1 at the end of its useful travel, with the structural body cutaway.

### DETAILED DISCLOSURE OF THE INVENTION

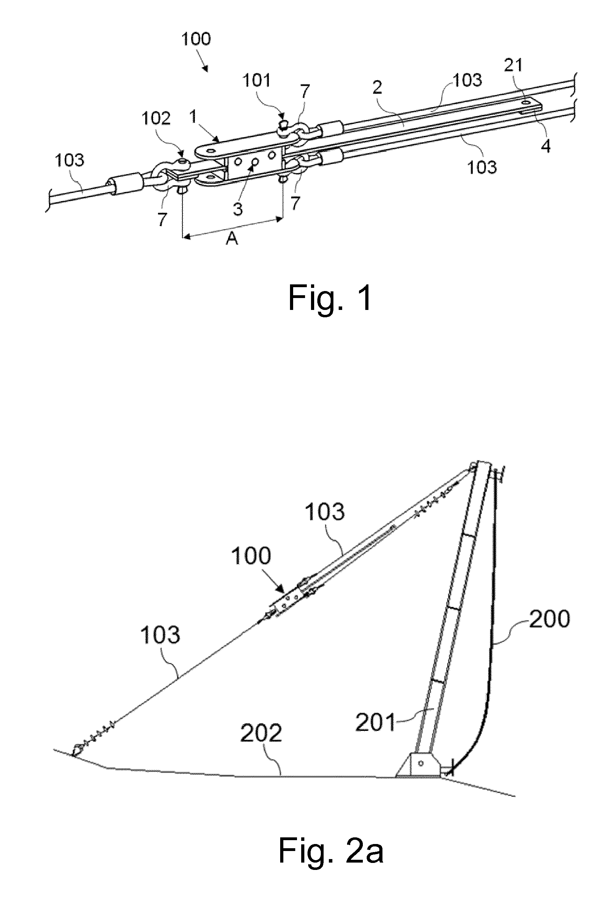

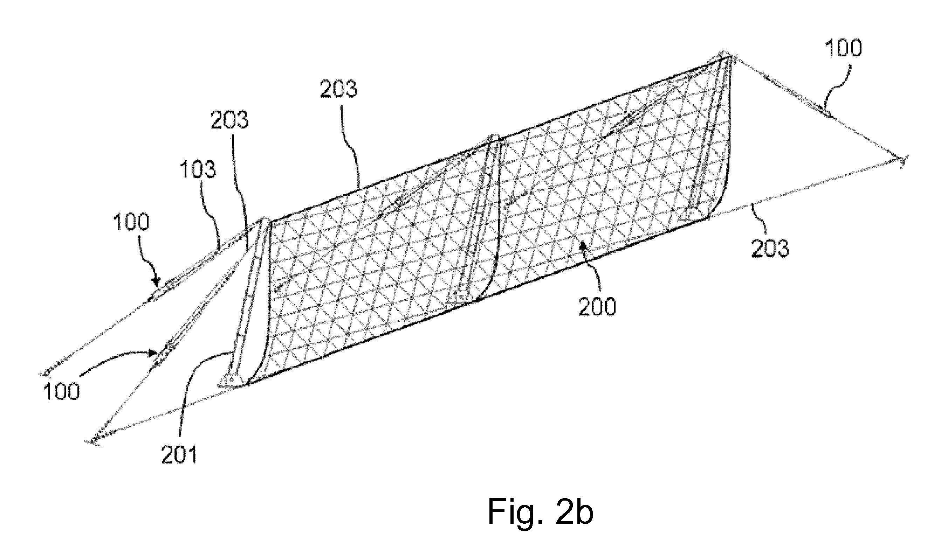

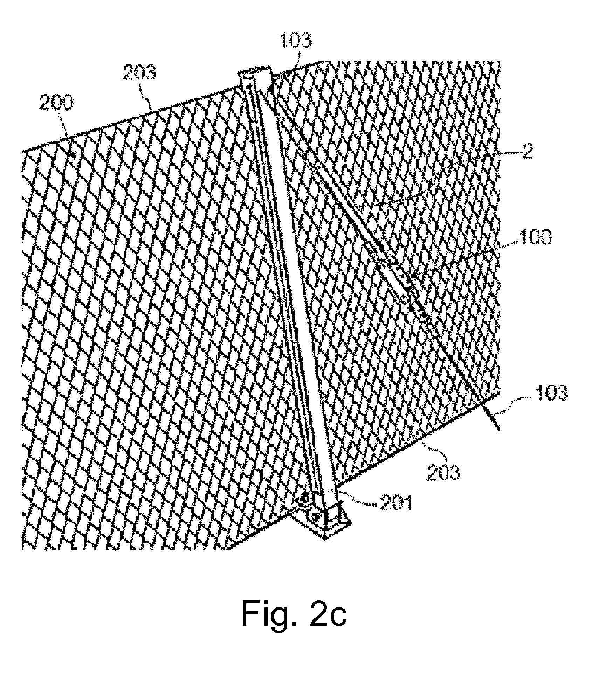

A first aspect of the invention relates to a longitudinal energy absorption device 100, such as that shown by way of example in Figure 1, which is suitable for being arranged and used in passive protection systems, as shown in Figures 2a, 2b and 2c by way of example. The protection systems can be of several types, such as for example, protection systems for protection against rockslide, protection systems for protection against landslide, protection systems for protection against snow avalanches or protection systems for protection against debris flow, and comprise at least one capturing surface 200, by way of a mesh or network, for supporting loads up to a given value. The device 100 of the invention aims to contribute to the dissipation of part of the kinetic energy transmitted by a rocky block or mass of ground sliding off a slope or hillside, or a mass of rock, ground or snow, when it impacts a passive protection system for protection against slides.

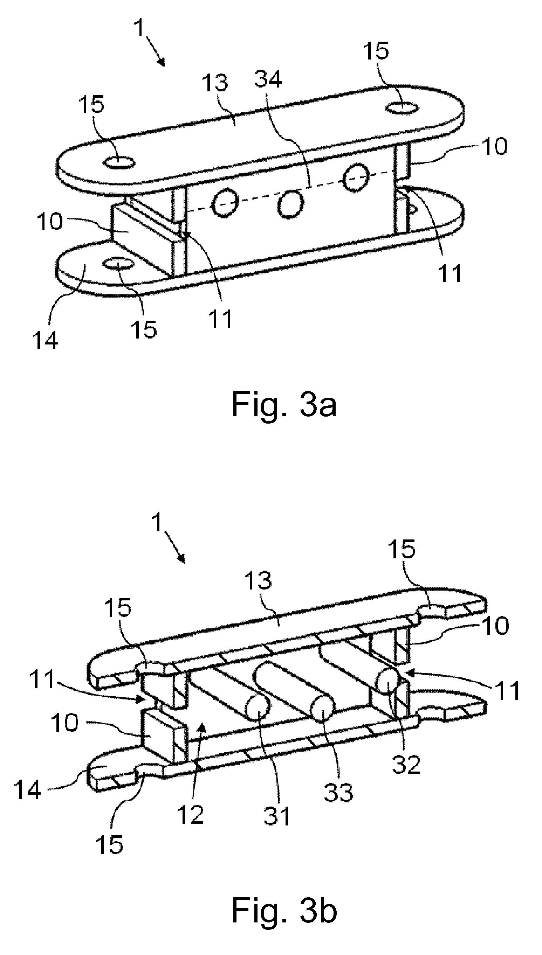

The device 100 comprises at least a first attachment point 101 and at least a second attachment point 102 separated by a load distance A which increases as the load on said device 100 increases, and at least one load transmission element 103, a steel cable, for example, fixed to each of the attachment points 101 and 102. The device 100 further comprises a hollow, preferably metal and rigid, structural body 1 shown with more detail in Figures 3a and 3b, and a longitudinal metal strip 2 comprising a length greater than the structural body 1, which longitudinally goes through said structural body 1 and is longitudinally movable in response to a load. The first attachment point 101 of the device 100 is arranged in the structural body 1 and the second attachment point 102 of said device 100 is arranged in the metal strip 2. Therefore, as described above in response to the presence of a load due to a slide, for example, the metal strip 2 moves longitudinally and the attachment points 101 and 102 are separated as a response to this movement. In addition, the metal strip 2 preferably has a rectangular section.

The device 100 comes into operation when the kinetic energy generated by the impact of the load on the protection system to which it is attached is greater than the working capacity in elastic state of said system. The introduction of the movement of the metal strip 2 allows damping the excess energy associated with the impact of the load when exceeding the state of elastic behavior of the protection system to which said device 100 is attached, in a stable and controlled load.

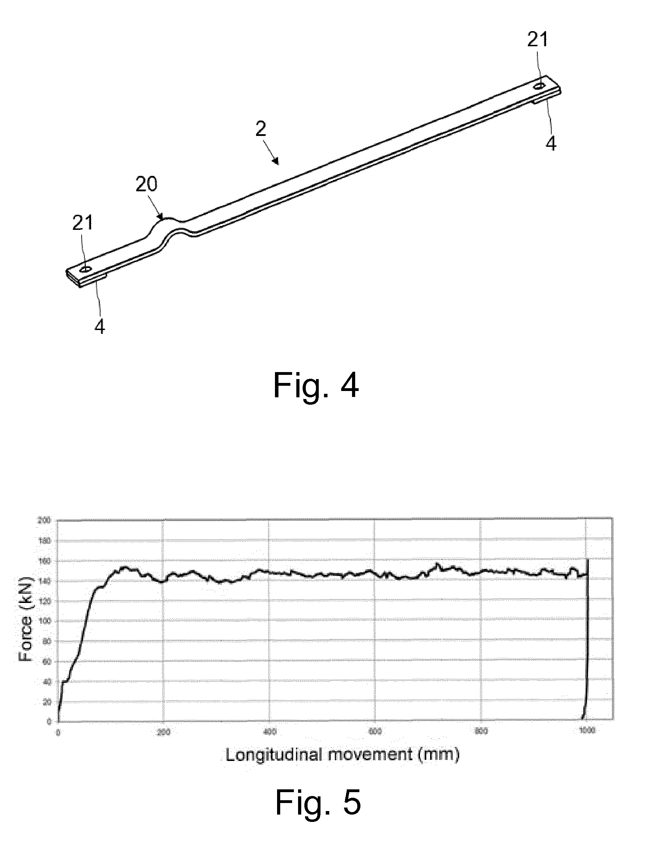

The device 100 also comprises deformation means 3 which are fixed inside the structural body 1 and are suitable for generating and/or maintaining a deformation 20 in the metal strip 2 during the movement thereof, shown by way of example in Figure 4. The deformation 20 is first generated before assembling the device 100, the metal strip 2 thus being provided with plastic deformation. The deformation means 3 are suitable mainly for causing a movement of said deformation 20 along the metal strip 2 during the movement of said metal strip 2. The deformation means 3 are designed such that the flat metal bar 2 (particularly the deformation 20) is duly fitted to favor the longitudinal movement thereof, without vertical movements, the vertical loads thus being balanced.

The movement of the metal strip 2 occurs in response to the presence of a load, so the load is absorbed by plastic deformation as a result of said deformation 20 (which is a plastic deformation). This increases the absorption capacity of the device 100 with respect to other solutions, including a solution comprising a device 100 with metal strip 2 but without deformation 20 where the absorption would occur by friction. Furthermore, the fact that energy is absorbed by plastic deformation allows generating a movement of the metal strip 2 under a constant and controlled force, and said forced is mainly defined by the quality of the material of the metal strip 2 and by the cross-section of said metal strip 2. The deformation work performed by said force is proportional to the movement of said metal strip 2, and equivalent to the energy absorbed by said metal strip 2 by plastic deformation. Therefore, depending on the maximum load to be supported with the device 100, the metal strip 2 will have a suitable section (width and thickness) and a suitable resistance material.

The design of the device 100 thereby allows using metal strips 2 having a different section, with different qualities of material (preferably a type of steel) and even having different lengths, depending on the energy absorption capacity to be given to the device 100. Therefore, when the device 100 is subjected to a given tensile force, for example, said device 100 develops a constant and controlled damping or braking force along its effective travel. Figure 5 shows an example of the damping force developed in the device 100 (the y-axis depicts the force in kN and the x-axis depicts the longitudinal movement supported by the device 100 in millimeters). As seen in said Figure 5, during approximately the first 150 mm of movement the force increases in an approximately linear manner. In this range, the metal strip 2 has not started moving, and the supported movement is due to the transmission elements 103. When reaching the activation force (force above which the metal strip 2 starts to move, and therefore the deformation 20 also starts to move along said metal strip 2 (in this example it is approximately 150 kN), the metal strip 2 starts to move until reaching its useful maximum deformation length (in this case approximately 1,000 mm (1 meter)). As can be seen, from the time the metal strip 2 starts to move until it reaches its useful maximum deformation length, the force supported by the device 100 hardly changes, being able to be interpreted as a constant force in that interval.

The deformation means 3 comprise an inlet point 31 and an outlet point 32 in contact with the metal strip 2, said deformation means 3 being suitable for deforming the metal strip 2 and/or keeping said metal strip deformed, specifically for deforming the segment of the metal strip 2 arranged between said points 31 and 32 and for keeping said segment deformed. Therefore, the deformation means 3 cause the deformation of the segment of the metal strip passing through the inlet point 31, and at the same time eliminate the deformation as it moves out of the outlet point 32, thus being suitable for only deforming the segment of the metal strip 2 arranged between both points 31 and 32. The deformation of the metal strip 2 is therefore always at the same point with respect to the structural body 1 during the movement of metal strip 2, but moves along the metal strip 2 as the strip moves.

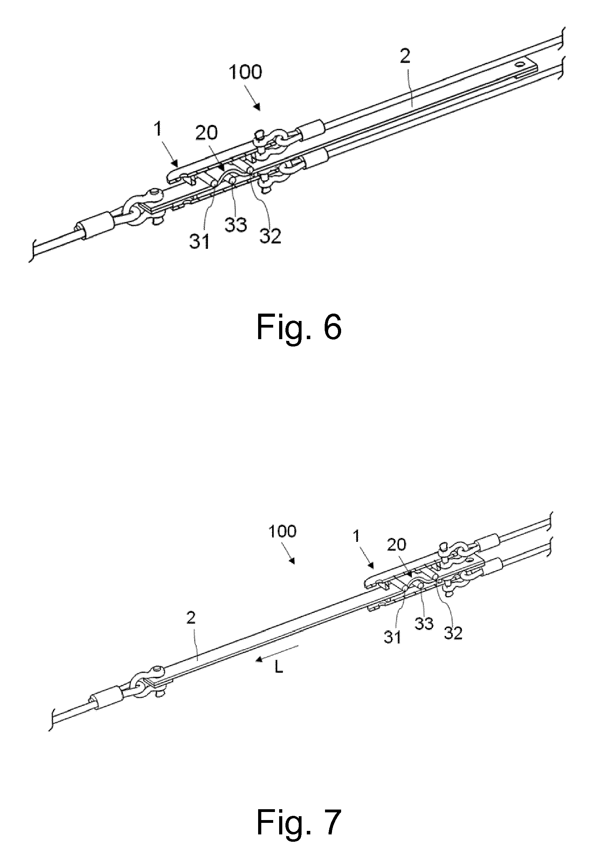

In a preferred embodiment of the device 100, the inlet point 31 is a first transverse pin and the outlet point 32 is a second transverse pin, both pins being aligned in a longitudinal axis 34 parallel to the metal strip 2. The deformation means 3 further comprise at least a third pin 33, as shown in Figure 6, which is arranged between the first two pins 31 and 32 and misaligned with respect to said first pins 31 and 32 (the pins 31, 32 and 33 therefore being arranged in a staggered manner), the deformation 20 of the metal strip 2 thereby moves as the metal strip moves. In the preferred embodiment, the third pin 33 is arranged below the longitudinal axis 34 of the first pins 31 and 32, the metal strip 2 being arranged above the first two pins 31 and 32 and below said third pin 33, in contact with the three pins 31, 32 and 33. In the preferred embodiment, the deformation 20 comprises a bend-like deformation having a U or V shape, which facilitates its movement along the metal strip 2. In other embodiments of the device 100, the third pin 33 could be above the longitudinal axis 34, in which case the metal strip 2 would be arranged below the first two pins and above said third pin 33, in contact with the three pins, and the deformation 20 would have an inverted U or V shape. In other embodiments, the deformation means 3 can comprise a plurality of pins arranged between the first pin 31 and the second pin 32, and they can be arranged in different manners (in a staggered manner or all the additional pins aligned with one another, for example).

The structural body 1 comprises two opposite walls 10 laterally demarcating its cavity thereof, and a respective window 11 in each side wall 10, the metal strip 2 going through both windows 11. The device 100 further comprises at least one additional part 4 fixed to the metal strip 2 (preferably on a surface of said metal strip 2), in an area of said metal strip 2 which is outside the structural body 1, the additional part 4 contacting the corresponding side wall 10 of said structural body 1 when the movement of the metal strip 2 causes it, said additional part 4 and said side wall 10 acting as a mechanical stop to limit the movement of said metal strip 2 when they collaborate with one another. As a result of the mechanical stop, the metal strip 2 housed in the structural body 1 is securely retained when its movement reaches a maximum movement previously determined by the position of the additional part 4, which in some cases may be enough to keep the load stable without the protection system to which the device 100 is attached failing. The arrangement of the additional part 4 defines the useful deformation length of the metal strip 2, and it is fixed depending on the characteristics of the metal strip 2 itself (on the energy absorption capacity of the device 100). Figure 7 shows the metal strip 2 at the end of its travel during the movement thereof in a longitudinal direction L, showing that the deformation 20 is at the point farthest away with respect to the end of the metal strip 2 attached to a transmission element 103.

In the preferred embodiment of the device 100, the metal strip 2 comprises a hole 21 at each of its ends, one of said holes 21 acting as a second attachment point 102 for the corresponding transmission element 103. The transmission element 103 can thus be attached to the metal strip 2 by means of an attachment shackle 7, or an equivalent element, which holds said transmission element 103 on one hand and fits into the corresponding hole 21 on the other. The fact of having two holes 21 allows the metal strip 2 to not be limited to a specific positioning in the device 100, which facilitates and speeds up the assembly of said device 100. Furthermore, this allows, together with the actual configuration of the device 100, that once the device 100 has been activated (once the metal strip 2 has started to move) and the effective travel thereof has been completed after an impact, said device 100 to be able to be reused by means of re-installing the metal strip 2 in a reverse position, without the need to replace the entire or part of the device 100. This possibility of reusing of the device 100 significantly reduces the maintenance costs and operations of the dynamic protection system to which the device 100 can be attached throughout its service life, since it is not necessary to replace the device 100 when it reaches its exhausted position, provided that the design energy level thereof is not exceeded.

Similarly, in the preferred embodiment the structural body 1 comprises a first longitudinal flat bar 13 and a second longitudinal flat bar 14 facing one another, a gap 12 being demarcated between both flat bars 13 and 14 and the two side walls 10 of said structural body 1. Both flat bars 13 and 14 project from said gap 12 at least one end (the same end), and each of said flat bars 13 and 14 comprises a hole 15 at its projecting end acting as the first attachment point 101 for a respective transmission element 103 or for one and the same transmission element 103. This also allows attaching the corresponding transmission element 103 to the device 100 with an attachment shackle 7 as described above in each hole 15, or with an equivalent element.

In the preferred embodiment of the device 100, the flat bars 13 and 14 of the structural body 1 project from the gap 12 at both ends, and each flat bar 13 and 14 comprises a hole 15 at each of its projecting ends, which can act as the first attachment point 101.

A second aspect of the invention relates to a protection system, preferably a dynamic protection system, comprising at least one device 100 such as that of the first aspect of the invention. The protection systems can be of several types, such as for example, dynamic protection systems for protection against rockslide, dynamic protection systems for protection against landslide, dynamic protection systems for protection against snow avalanches or dynamic protection systems for protection against debris flow, and comprises at least one capturing surface 200, by way of a mesh or network, for supporting loads up to a given value. A protection system generally comprises a plurality of flexible surfaces 200 attached to one another. Arranging the device 100 in the system aims to contribute to the dissipation of part of the kinetic energy transmitted by a load, for example, a rocky block or mass of ground sliding off a slope or hillside, or a mass of rock, ground or snow, on said protection system, when it impacts said protection system. Therefore, the device 100 connected to said protection system receives the loads generated on the system as a result of the transmission of stresses generated on the capturing surface 200, and contributes to damping the impact which is generated against the system. The device 100 can therefore form an active part of said protection system.

The capturing surface 200 is usually fixed to the ground 202 by means of at least two support elements 201 (posts or other equivalent elements). The support elements 201 are fixed to the ground 202, and the capturing surface 200 is associated with said support elements 201 by means of at least one longitudinal transmission element 203, preferably a steel cable, which can in turn be associated with at least two devices 100 such as that of the first aspect of the invention. Each support element 201 also has associated therewith at least one device 100 such as that of the first aspect of the invention, and is connected to it directly or through a shackle 7 (or an equivalent element) and to the ground 202 through a suitable anchoring, generally of a flexible type.

When the capturing surface 200 is subjected to an impact, said capturing surface 200 acquires a given load which is transmitted to the transmission elements 203 to which it is attached, and the load is transmitted from said transmission elements 203 to the support elements 201 and to the devices 100. Each support element 201 transmits part of the excess load generated to the device 100 to which it is connected, damping part of the energy of the impact, whereas another part of the energy is longitudinally transmitted to the devices 100 through the tensile stress generated along the transmission elements 203. The side devices 100 are suitably fixed to the ground 202 through an anchoring which dissipates the generated load to the stable area of the ground 202.

The system therefore comprises the advantages that have been described above for the device 100. Furthermore, when a device 100 is subjected to a given tensile force, for example, said device 100 being arranged in the system develops a constant and controlled damping or braking force along its effective travel, such that the load impacting the protection system to which said device 100 belong develops a constant deceleration until it stops completely for a given level of energy.

The operation of the device 100 of the invention installed in a protection system (therefore forming part of said protection system) is generally described below.

The device 100 is suitable for being installed in protection systems such as those described, and can be installed at different points of said system (each system can therefore comprise a plurality of devices 100). The device 100 is preferably attached to the support elements forming the support structure of the system (support cables and/or ties, metal posts and reaction anchorings, etc.).

During the design phase of the protection system, the support elements that must be installed together with a device 100 is established, as well as the resistance and energy characteristics thereof, depending on the total energy absorption capacity required by the system. The connection of the device 100 to the support elements of the assembly of the system is performed through a suitable element, such as a suitable steel resistance shackle 7, for example, which is directly connected to the support element by means of a corresponding transmission element 103 (which can therefore comprise a shackle 7 at each end). Under this arrangement, the device 100 allows transmitting the stresses generated in the support element along the entire length thereof without the latter losing continuity.

In the particular case in which the device 100 is connected as a retention and damping tie of the system, the transmission element 103 is directly connected to the support element 201 transmitting the load, or by means of a shackle 7, whereas the metal strip 2 is connected at the opposite end to another transmission element 103 which is fixed to a reaction element reacting to the ground 202 generally formed by a flexible cable anchoring.

The stresses transmitted to the system by the impact first cause the support elements of the system to reach their expected working capacity in elastic state. After this moment, given that part of the kinetic energy of the block has yet to be damped, the device 100 installed in the corresponding support element starts to work. The device 100 is therefore activated when the force to which it is subjected reaches a given and known value above which the movement of the metal strip 2 starts, and said force remains constant throughout the entire travel of the metal strip 2, dissipating energy by constant plastic deformation proportional to the value of the force by the movement produced.

When the ends of the device 100 are tensed as a result of the load generated in the support elements of the system, upon reaching a given design load, the metal strip 2 starts to plastically deform, which is translated into in a longitudinal movement of the deformation 20 along the length of the metal strip 2, when said metal strip 2 is forced to move going through the deformation means 3. The device 100 reaches its exhausted position when the deformation 20 of the metal strip 2 reaches the end of its expected travel, i.e., when said deformation has moved longitudinally along its entire useful travel, dissipating a given energy in its movement.

The device 100 can be reused once it reached its exhausted position, for which it is sufficient to disassemble the attachment accessories from both ends of the device (attachment elements 7) and to reinstall them in an inverted position.

The device 100 is again connected in the manner similar to that of its first installation, where the deformation 20 is again at the start of the length of the metal strip 0, close to the corresponding transmission element 103.

The device 100 is therefore a device for reversible and multiple uses, being able to be reused throughout the service life of the dynamic passive protection system having an elastoplastic behavior for protection against slides, as mentioned above.

The use of the device 100 within a passive containment system for containment against slides furthermore allows accurately knowing the energy absorption level or capacity of the assembly of the system, due to the fact that the energy absorption capacity of each device 100 is known, the energy of the assembly being equal to the sum of the energy absorbed by each of the devices 100 acting in a given impact.

## Claims

1. Energy dissipation device for protection systems, comprising a first attachment point (101) and a second attachment point (102) separated by a load distance (A) which increases as the load on said device (100) increases, and at least a respective load transmission element (103) fixed to each of the attachment points (101, 102), **characterized in that** the device (100) further comprises a hollow structural body (1), a longitudinal metal strip (2) comprising a length greater than the structural body (1), which longitudinally passes through said structural body (1) and is longitudinally movable in response to a load, the first attachment point (101) of the device (100) being arranged in the structural body (1) and the second attachment point (102) of said device (100) being arranged in the metal strip (2), and deformation means (3) which are fixed inside the structural body (1) and are suitable for generating and/or maintaining a deformation (20) in the metal strip (2).

2. Energy dissipation device according to claim 1, wherein the deformation means (3) comprise an inlet point (31) and an outlet point (32) in contact with the metal strip (2), said deformation means (3) being suitable for deforming the segment of the metal strip (2) arranged between said points (31, 32) and for keeping it deformed.

3. Energy dissipation device according to claim 2, wherein the inlet point (31) is a first transverse pin and the outlet point (32) is a second transverse pin, both pins being aligned in a longitudinal axis (34) parallel to the metal strip (2) and the deformation means (3) comprising at least a third pin (33) arranged between the first two pins and misaligned with respect to said first pins.

4. Energy dissipation device according to claim 3, wherein the third pin (33) is arranged below the longitudinal axis (34) of the first pins, the metal strip (2) being arranged above the first two pins and below said third pin (33), in contact with the three pins.

5. Energy dissipation device according to any of the preceding claims, wherein the structural body (1) comprises two opposing walls (10) laterally demarcating its cavity thereof, and a respective window (11) in each side wall (10), the metal strip (2) passing through both windows (11).

6. Energy dissipation device according to claim 5, comprising an additional part (4) fixed to the metal strip (2), in an area of said metal strip (2) which is outside the structural body (1), which contacts with the corresponding side wall (10) of said structural body (1) when the movement of the metal strip (2) causes it, said additional part (4) and said side wall (10) acting as a mechanical stop to limit the movement of said metal strip (2) when they cooperate with one another.

7. Energy dissipation device according to claim 5 or 6, wherein the structural body (1) further comprises a first longitudinal flat bar (13) and a second longitudinal flat bar (14) facing one another, a gap (12) being demarcated between both flat bars (13, 14) and the two side walls (10) of said structural body (1), each flat bar (13, 14) comprising at least one end projecting from the corresponding side wall (10) and a hole (15) acting as the first attachment point (101), both projecting ends facing one another.

8. Energy dissipation device according to claim 7, wherein each flat bar (13, 14) comprises a second end projecting from the other side wall (10) of the structural body (1), each flat bar (13, 14) comprising at least one end projecting from the corresponding side wall (10) and a hole (15) acting as the first attachment point (101).

9. Energy dissipation device according to any of the preceding claims, wherein the metal strip (2) comprises a hole (21) at each of its ends, one of said holes (21) acting as the second attachment point (102) for the corresponding transmission element (103).

10. Protection system for protection against rockslide, landslide, snow avalanches or debris flow comprising a support structure comprising at least one capturing surface (200), by way of a mesh or network, fixed to the ground (202) by means of at least two support elements (201), **characterized in that** the system further comprises at least one device (100) according to any of the preceding claims associated with each support element (201), the capturing surface (200) furthermore being fixed to the ground (202) by means of said devices (100).

11. Protection system according to claim 10, wherein each device (100) is associated with the corresponding support element (201) by means of at least one transmission element (103) which is fixed to an attachment point (101) of the device (100), at least one transmission element (103) which is fixed to another attachment point (102) of said device (100) being fixed to the ground (202).
